# EUROPÄISCHE PATENTANMELDUNG

(11) **EP 1 522 824 A1**
(43) Veröffentlichungstag der Anmeldung: **13.04.2005**
(21) Anmeldenummer: 04104109.6
(22) Anmeldetag: 26.08.2004
(51) Int. Cl.: G01C 21/26, B60K 31/00

(54) **Datenverarbeitungseinheit für Assistenzeinrichtungen in Kraftfahrzeugen und Verfahren zur Bereitstellung von aktuellen fusionierten Situationsdaten**

(30) Priorität: 09.10.2003 DE 10346846
(71) Anmelder: ROBERT BOSCH GMBH, 70442 Stuttgart (DE)
(72) Erfinder: Janssen, Holger, 31840 Hessisch Oldendorf (DE); Vogt, Wilhelm, 33165 Lichtenau (DE); Neukirchner, Ernst-Peter, 31139 Hildesheim (DE); Varchmin, Axel, 31180, Giesen (DE)

(57) **Zusammenfassung**

Datenverarbeitungseinheit für Assistenzeinrichtungen in Kraftfahrzeugen mit einer Eingangsschnittstelle für Straßennetzdaten (1) und einer Eingangsschnittstelle für Umfelddaten (2) von mindestens einem zur Aufnahme von Informationen über das Umfeld des Kraftfahrzeuges vorgesehenen Umfeldsensor hat Mittel zur Zusammenführung (3) der Straßennetzdaten (1) und der Umfelddaten (2), um die Straßennetzdaten (1) mit den Umfelddaten (2) zu aktualisieren, zu modifizierten und/oder zu ergänzen und/oder die Umfelddaten (2) mittels der Straßennetzdaten (1) zu modifizieren, und eine Ausgabeschnittstelle zur Weitergabe der zusammengeführten Straßennetz- und Umfelddaten (1, 2) als fusionierte Situationsdaten in einem einheitlichen Datenprotokoll an mindestens eine Assistenzeinrichtung (6a, 6b).

## Beschreibung

Die Erfindung betrifft eine Datenverarbeitungseinheit für Assistenzeinrichtungen in Kraftfahrzeugen mit einer Eingangsschnittstelle für Straßennetzdaten und einer Eingangsschnittstelle für Umfelddaten von mindestens einem zur Aufnahme von Informationen über das Umfeld des Kraftfahrzeuges vorgesehenen Umfeldsensor.

Die Erfindung betrifft weiterhin ein Verfahren zur Bereitstellung von aktuellen fusionierten Situationsdaten an mindestens eine Assistenzeinrichtung in Kraftfahrzeugen.

Einrichtungen in Kraftfahrzeugen, wie beispielsweise Navigationsgeräte, die einen Zugriff auf digitale Daten haben, sind hinreichend bekannt. Diese Einrichtungen werden mit proprietären Schnittstellen, d. h. hersteller- oder verbandsspezifisch definierten Schnittstellen an andere Systeme angeschlossen, wie z. B. Anzeige- und Bedieneinrichtungen.

Zudem sind prädiktive Assistenzeinrichtungen in Kraftfahrzeugen bekannt, die auf der Basis von relevanten Kartendaten für eine Umgebung um die aktuelle Fahrzeugposition herum und auf Basis von Daten über die Fahrzeugbewegung beispielsweise zur Unterstützung der Fahrzeugführung dienen. Derartige Assistenzeinrichtungen können beispielsweise Ortungsgeräte oder Navigationsgeräte etc. sein.

Aus der EP 1 111 336 A1 und der EP 1 111 338 A2 ist eine Assistenzeinrichtung für Kraftfahrzeuge bekannt, bei der auf der Basis von digitalen Kartendaten und der aktuellen Fahrzeugposition die relevanten Kartendaten für die Umgebung um die aktuelle Fahrzeugposition herum ermittelt und für den Zugriff durch Fahrerassistenzeinrichtungen abgespeichert werden. Diese relevanten Kartendaten werden auch Horizont genannt.

Das Problem bei der Weitergabe von digitalen Straßennetzdaten an prädiktive Assistenzeinrichtungen in Kraftfahrzeugen besteht darin, dass diese immer in einem gewissen Maße fehlerbehaftet sind. Diese Fehler entstehen nicht nur bei der Erhebung, sondern auch dadurch, dass die Daten veralten. Die digitalen Kartendaten werden nämlich zumeist auf digitalen Datenträgem, wie beispielsweise CD-ROMs, den Nutzern zur Verfügung gestellt. Dabei entsteht eine Zeitverzögerung zwischen der Erhebung der Kartendaten und der Bereitstellung der Datenträger an die Nutzer sowie eine Veralterung während der Nutzungsdauer beim Verbraucher.

Weiterhin besteht das Problem, Assistenzeinrichtungen in Kraftfahrzeugen die benötigten Straßennetz- und Umfelddaten möglichst einheitlich über eine einzige genormte Schnittstelle zur Verfügung zu stellen.

Unter Straßennetzdaten im Sinne der vorliegenden Erfindung werden Kartendaten verstanden, die neben Informationen über bauliche Gegebenheiten, wie z. B. Krümmungen, Straßengeometriestützpunkten, Verkehrsschildern, Zebrastreifen, Brücken, Tunnel, Steigungen, Straßenbelag, Randbebauung, Fahrspuranzahl, Fahrspurbreiten, Einbahnstraßen, baulichen Trennungen von Straßen etc. auch Positionsinformationen enthalten, wie z. B. aktuelle geschätzte Positionen, aktuelle mögliche Positionen auf dem Straßennetz jeweils mit Geschwindigkeit, Ausrichtung, Unsicherheitsumgebung, Wahrscheinlichkeit etc.

Aufgabe ist es daher, eine verbesserte Datenverarbeitungseinheit für Assistenzeinrichtungen in Kraftfahrzeugen sowie ein Verfahren zur Bereitstellung von aktuellen fusionierten Situationsdaten an mindestens eine Assistenzeinrichtung in Kraftfahrzeugen zu schaffen.

Die Aufgabe wird mit der gattungsgemäßen Datenverarbeitungseinheit erfindungsgemäß dadurch gelöst, dass die Datenverarbeitungseinheit Mittel zur Zusammenführung der Straßennetzdaten und der Umfelddaten hat, um die Straßennetzdaten mit den Umfelddaten zu aktualisieren, zu modifizieren und/oder zu ergänzen und/oder die Umfelddaten mittels der Straßennetzdaten zu modifizieren, und eine Ausgabeschnittstelle zur Weitergabe der zusammengeführten Straßennetz- und Umfelddaten als fusionierte Situationsdaten in einem einheitlichen Datenprotokoll an mindestens eine Assistenzeinrichtung hat.

Durch die Fusion der Straßennetzdaten mit den Informationen aus Umfeldinformationsquellen über das Umfeld des Kraftfahrzeuges vor der Übertragung an andere Assistenzeinrichtungen können Fehler der Straßennetzdaten korrigiert und Lücken in den digitalen Straßennetzdaten ergänzt werden. Zudem müssen die Assistenzeinrichtungen nur noch mit einer einheitlichen Schnittstelle für die fusionierten Situationsdaten ausgerüstet werden und es können spezialisierte Anschlüsse für eine Vielzahl unterschiedlicher Umfeldsensoren entfallen. Bei der Übertragung der Straßennetz- und Umfelddaten an die Assistenzeinrichtungen über einen Datenbus hat die Fusion der Straßennetz- und Umfelddaten zu fusionierten Situationsdaten zudem den Vorteil, dass die Informationen bereits an der Informationsquelle verdichtet werden und damit weniger von der Bandbreite von Bussystemen in Kraftfahrzeugen in Anspruch genommen werden muss.

Die Aufgabe wird weiterhin durch das Verfahren zur Bereitstellung von aktuellen fusionierten Situationsdaten an mindestens eine Assistenzeinrichtung in Kraftfahrzeugen erfindungsgemäß gelöst durch

Zusammenführen von Straßennetzdaten und von Umfelddaten mit Informationen über das Umfeld des Kraftfahrzeuges, wobei die Straßennetzdaten mit den Umfelddaten aktualisiert, modifiziert und/oder ergänzt werden, und

Weitergeben der zusammengeführten Straßennetz- und Umfelddaten als aktuelle fusionierte Situationsdaten an mindestens eine Assistenzeinrichtung des Kraftfahrzeuges.

Die Ergänzung der Straßennetzdaten durch die Umfelddaten von weiteren Umfeldsensoren, die eine andere und/oder aktuelle Sicht des Umfeldes des Kraftfahrzeuges haben, hat den Vorteil, dass Datenfehler z. B. durch Alterung, fehlerhafte Erfassung und fehlerhafte Positionierung verringert werden können und damit die Qualität der Daten entscheidend verbessert werden kann. Zudem werden bestimmte Daten durch die Informationsfusion erst für Assistenzfunktionen nutzbar, z. B. die Auswertung von Wechselverkehrszeichen durch Videosensoren. Weiterhin können standardisierte Schnittstellen um zusätzliche Daten einfach erweitert werden. Dies erhöht die Akzeptanz und Einsatzmöglichkeiten der Schnittstelle zu Assistenzeinrichtungen. Die Fusion der Straßennetz- und Umfelddaten ermöglicht frei skalierbar die Einbindung von mehreren zusätzlichen Sensoren und Informationsquellen entsprechend den jeweiligen Systemanforderungen, wobei die Sensoren Informationen liefern können, die über den Informationsgehalt der Straßennetzdaten hinausgehen und diesen ergänzen.

Als Umfeldsensoren können beispielsweise Videokameras, Richtungsanzeiger-Signalgeber, Abstandssensoren zur Bestimmung des Abstandes des Kraftfahrzeuges zu vorherfahrenden oder nachfolgenden Fahrzeugen, Fahrzeug-zu-Fahrzeug-Kommunikationseinrichtungen, Fahrzeug-Umfeld-Kommunikationseinrichtungen, Regensensoren, Temperatursensoren, Fahrdynamiksensoren, Gewichtssensoren, Uhrzeitgeber und/oder Seitenabstandssensoren einzeln oder in beliebigen Kombinationen vorgesehen sein.

Die Datenverarbeitungseinheit kann beispielsweise in eine Assistenzeinrichtung integriert sein.

Besonders vorteilhaft ist es jedoch, wenn diese unabhängig davon ist und an die Ausgangsschnittstelle der Datenverarbeitungseinheit ein Datenverteilmittel mit einer Mehrzahl von Ausgängen zum parallelen Anschluss von Assistenzeinrichtungen angekoppelt ist. Die Datenverteilmittel (Splitter) sind dabei zur Anpassung der Datenraten und Verteilung der vollständigen oder jeweils ausgewählten Teile der fusionierten Situationsdaten an die Assistenzeinrichtungen ausgebildet. Auf diese Weise können die fusionierten Situationsdaten an eine Vielzahl von Assistenzeinrichtungen verteilt werden, ohne dass diese wie bislang Schnittstellen sowohl für digitale Straßennetzdaten, als auch für Umfelddaten bereitstellen müssen.

Vorteilhaft ist es, wenn Horizontauswahlmittel zur Auswahl relevanter Straßennetzdaten für die Umgebung der aktuellen Fahrzeugpositionen aus den digitalen Straßennetzdaten vorgesehen sind, um den sogenannten Horizont bereitzustellen. Diese Horizontauswahlmittel mit ihrem Ausgang können an eine Standard-Schnittstelle für digitale Straßennetzdaten geklemmt sein, wobei die Zusammenführung der Umfelddaten mit den ausgewählten relevanten Straßennetzdaten, d. h. mit dem Horizont erfolgt.

Alternativ können die Horizontauswahlmittel auch hinter die Ausgangsschnittstelle der Datenverarbeitungseinheit für die fusionierten Situationsdaten geklemmt sein, um die fusionierten Situationsdaten auf die aktuelle räumliche Umgebung des Kraftfahrzeuges zu beschränken.

Die Datenfusion vor der Ermittlung des Horizonts hat den Vorteil, dass fehlerhafte bzw. nicht aktuelle Daten bereits vor der weiteren Verarbeitung eliminiert, ergänzt oder korrigiert werden können und daher der Datenverkehr gering gehalten wird.

In entsprechender Weise erfolgt bei dem erfindungsgemäßen Verfahren ein Auswählen relevanter Straßennetzdaten für die Umgebung der aktuellen Fahrzeugposition aus den digitalen Straßennetzdaten und Zusammenführen der Umfelddaten mit den ausgewählten relevanten Straßennetzdaten für den Fall der Informationsfusion hinter dem sogenannten Horizont, bzw. für den Fall einer Informationsfusion vor dem Horizont ein Auswählen relevanter Straßennetzdaten für die Umgebung der aktuellen Fahrzeugposition aus den fusionierten Situationsdaten, um die fusionierten Situationsdaten auf die aktuelle räumliche Umgebung des Kraftfahrzeuges zu beschränken.

Die Erfindung wird nachfolgend anhand der beigefügten Zeichnungen näher erläutert. Es zeigen:
Figur 1 - Blockdiagramm eines Verfahrens zur Zusammenführung von digitalen Straßennetzdaten und Umfelddaten vor dem Horizont;
Figur 2 - Blockdiagramm eines Verfahrens zur Zusammenführung von digitalen Straßennetzdaten und Umfelddaten hinter dem Horizont;
Figur 3 - Blockdiagramm eines Verfahrens zur Zusammenführung von digitalen Straßennetzdaten und Umfelddaten in einem proprietären System;
Figur 4 - Blockdiagramm eines Verfahrens zur Zusammenführung von Horizont, Umfelddaten und digitalen Straßennetzdaten unter Umgehung einer Standard-Schnittstelle;
Figur 5 - Blockdiagramm eines Verfahrens mit einer Datenratenanpassung und Verteilung fusionierter Situationsdaten an Assistenzeinrichtungen.

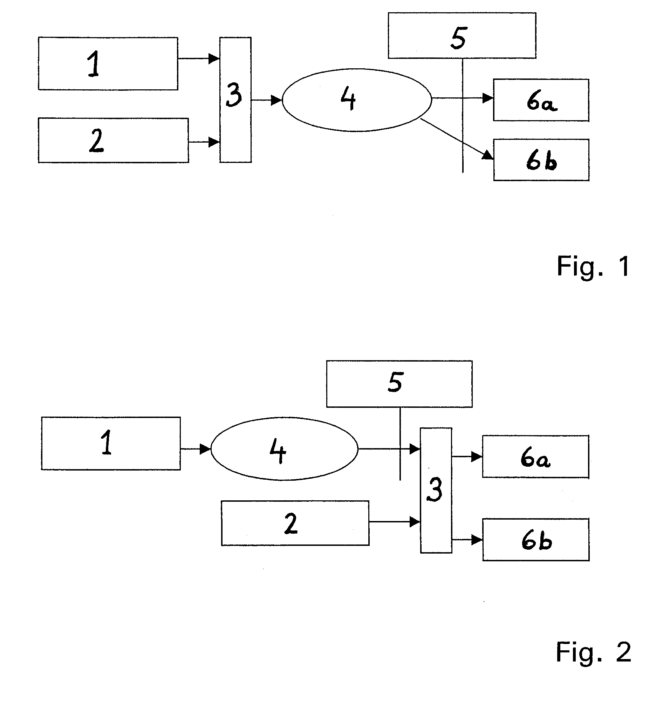

Die Figur 1 lässt ein Blockdiagramm eines Verfahrens erkennen, bei dem digitale Straßennetzdaten 1 mit Umfelddaten 2 zu fusionierten Situationsdaten 3 zusammengeführt werden. Die digitalen Straßennetzdaten 1 können z. B. auf einem Datenträger gespeichert und durch ein Navigationsgerät bereitgestellt werden. Sie können aber auch per Funk von einer Navigationszentrale an ein Kraftfahrzeug gesendet werden.

Die Umfelddaten 2 werden mit Umfeldsensoren aufgenommen, die an dem Kraftfahrzeug angeordnet sind. Als Umfeldsensoren können beispielsweise Videokameras, Richtungsanzeiger-Signalgeber, Abstandssensoren zur Bestimmung des Abstandes des Kraftfahrzeuges zu vorherfahrenden oder nachfolgenden Fahrzeugen, Fahrzeug-zu-Fahrzeug-Kommunikationseinrichtungen (Kommunikationssysteme zum Empfang externer Sensorsignale oder Umfelddaten von weiteren Fahrzeugen), Fahrzeug-Umfeld-Kommunikationseinrichtungen (Kommunikationssysteme zum Empfang externer Sensorsignale von festen Sendern wie z. B. Baken-, Funk-, Radio oder TV-Sendem), Regensensoren, Temperatursensoren, Fahrdynamiksensoren, Gewichtssensoren, Uhrzeitgeber und/oder Seitenabstandssensoren beispielsweise einer Einparkhilfe genutzt werden.

Der Schritt der Zusammenführung der digitalen Straßennetzdaten 1 und der Umfelddaten 2 erfolgt in einer beispielsweise durch geeignete Programmierung angepassten Datenverarbeitungseinheit, um die Straßennetzdaten 1 zu aktualisieren, zu modifizieren und/oder zu ergänzen. Hierbei werden aus den Umfelddaten 2 extrahierte Informationen über das Umfeld des Kraftfahrzeuges ausgewertet und zur Aktualisierung, Modifizierung und/oder Ergänzung der digitalen Straßennetzdaten 1 genutzt. Ebenso können die Umfelddaten 2 mittels der Straßennetzdaten modifiziert werden. Die zusammengeführten Straßennetz- und Umfelddaten 1, 2 werden als fusionierte Situationsdaten 3 mit Auswahlmitteln so weiter verdichtet, dass relevante Straßennetzdaten 4 als Horizont für die Umgebung der aktuellen Fahrzeugposition ausgewählt werden. Der Horizont wird dann über eine Standardschnittstelle 5 prädiktiven Assistenzeinrichtungen 6a, 6b zur Verfügung gestellt.

Die Zusammenführung der digitalen Straßennetzdaten 1 und Umfelddaten 2 hat neben der Aktualisierung der digitalen Straßennetzdaten 1 den Vorteil, dass die prädiktiven Assistenzeinrichtungen 6a, 6b keine angepassten Schnittstellen für Umfeldsensoren aufweisen müssen, um die Umfelddaten 2 zu empfangen.

Die Figur 2 lässt eine andere Ausführungsform des Verfahrens zum Zusammenführen 3 von digitalen Straßennetzdaten 1 und Umfelddaten 2 erkennen. Hierbei werden die digitalen Straßennetzdaten 1 zunächst auf die relevanten Straßennetzdaten 4 um die aktuelle Position des Kraftfahrzeuges herum beschränkt, d. h. zunächst wird aus den digitalen Straßennetzdaten 1 der Horizont ermittelt. Über eine Standard-Schnittstelle 5 werden die relevanten Straßennetzdaten 4 dann mit den Umfelddaten 2 zusammengeführt und die zusammengeführten aktuellen fusionierten Situationsdaten anschließend in einem einheitlichen Datenprotokoll (Datenformat) an die prädiktiven Assistenzeinrichtungen 6a, 6b weitergeleitet.

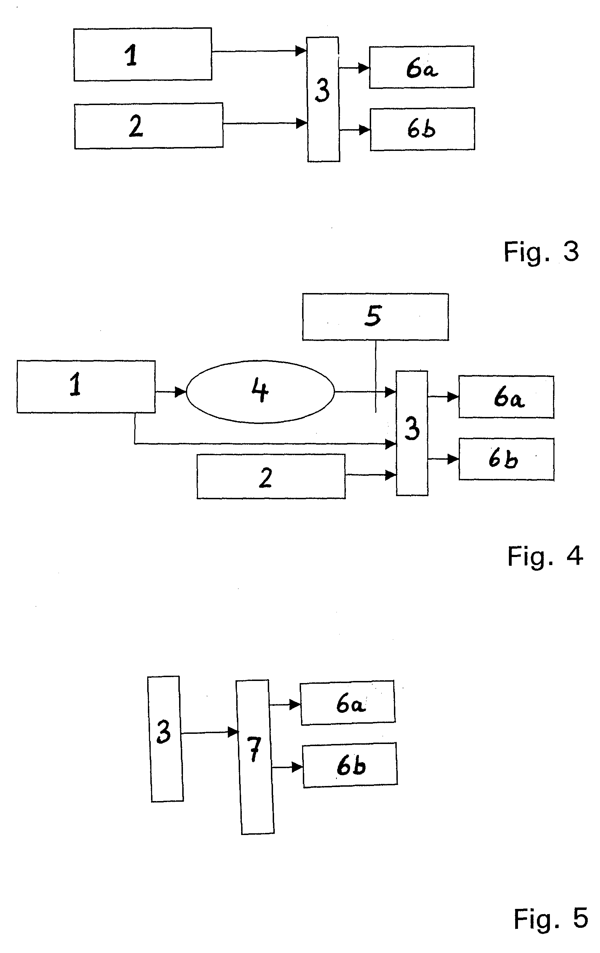

Die Figur 3 lässt eine andere Ausführungsform des erfindungsgemäßen Verfahrens mit einer Zusammenführung der digitalen Straßennetzdaten 1 und Umfelddaten 2 in einem proprietären System erkennen. Auch wenn keine Standardschnittstelle 5 für den Horizont vorhanden ist, sondern eine proprietäre Schnittstelle genutzt wird, kann trotzdem zentral eine Datenfusion erfolgen.

Die Figur 4 lässt eine weitere Ausführungsform des erfindungsgemäßen Verfahrens mit einer Umgehung der Standard-Schnittstelle 5 für den Horizont erkennen. Die relevanten Straßennetzdaten 4 (Horizont) werden aus den digitalen Straßennetzdaten 1 erzeugt und über eine Standard-Schnittstelle 5 der Datenverarbeitungseinheit bereitgestellt. Wesentlich ist jedoch, dass die digitalen Straßennetzdaten 1 unbeschränkt über eine weitere Schnittstelle in die Datenverarbeitungseinheit geleitet und mit den Umfelddaten 2 zusammengeführt werden. Der Horizont wird dabei zusätzlich mit berücksichtigt.

Die zusammengeführten aktuellen fusionierten Situationsdaten werden dann den prädiktiven Assistenzeinrichtungen 6a, 6b zur Verfügung gestellt.

Die Figur 5 lässt eine Erweiterung des erfindungsgemäßen Verfahrens erkennen, wobei nach dem Zusammenführen mit Hilfe von Datenverteilmitteln 7 die Datenraten der fusionierten Situationsdaten 3 bei der Übertragung an die Assistenzeinrichtungen 6a, 6b jeweils angepasst und die fusionierten Situationsdaten 3 oder ggf. jeweils unterschiedliche Teile davon an die Assistenzeinrichtung 6a, 6b verteilt werden. Die Datenverteilmittel 7, auch Splitter genannt, können zusätzlich einen Cache-Speicher besitzen, um den Datenverkehr nach der Datenfusion gering zu halten und die Datenverarbeitungseinheit zur Zusammenführung der digitalen Straßennetzdaten 1 und der Umfelddaten 2 zu entlasten.

Ein solches Datenverteilmittel 7 kann auch optional hinter einer Standard-Schnittstelle 5 vorgesehen sein, um den Datenverkehr in dem Horizont gering zu halten und den Horizont zu entlasten.

## Patentansprüche

1. Datenverarbeitungseinheit für Assistenzeinrichtungen in Kraftfahrzeugen mit einer Eingangsschnittstelle für Straßennetzdaten (1) und einer Eingangsschnittstelle für Umfelddaten (2) von mindestens einem zur Aufnahme von Informationen über das Umfeld des Kraftfahrzeuges vorgesehenen Umfeldsensor, **dadurch gekennzeichnet, dass** die Datenverarbeitungseinheit Mittel zur Zusammenführung (3) der Straßennetzdaten (1) und der Umfelddaten (2) hat, um die Straßennetzdaten (1) mit den Umfelddaten (2) zu aktualisieren, zu modifizieren und/oder zu ergänzen und/oder die Umfelddaten (2) mittels der Straßennetzdaten (1) zu modifizieren, und eine Ausgabeschnittstelle zur Weitergabe der zusammengeführten Straßennetz- und Umfelddaten (1, 2) als fusionierte Situationsdaten in einem einheitlichen Datenprotokoll an mindestens eine Assistenzeinrichtung (6) hat.

2. Datenverarbeitungseinheit nach Anspruch 1, **dadurch gekennzeichnet, dass** als Umfeldsensor eine Videokamera, ein Richtungsanzeiger-Signalgeber, Abstandssensoren zur Bestimmung des Abstands des Kraftfahrzeugs zu vorherfahrenden oder nachfolgenden Fahrzeugen, Seitenabstandssensoren, Fahrzeug-zu- Fahrzeug-Kommunikationseinrichtungen, Fahrzeug-Umfeld-Kommunikationseinrichtungen, Regensensoren, Temperatursensoren, Fahrdynamiksensoren, Gewichtssensoren und/oder Uhrzeitgeber eingesetzt sind.

3. Datenverarbeitungseinheit nach Anspruch 1 oder 2, **dadurch gekennzeichnet, dass** die Datenverarbeitungseinheit in eine Assistenzeinrichtung (6) integriert ist.

4. Datenverarbeitungseinheit nach Anspruch 1 oder 2, **dadurch gekennzeichnet, dass** ein an die Ausgangsschnittstelle gekoppeltes Datenverteilmittel (7) mit einer Mehrzahl von Ausgängen zum parallelen Anschluss von Assistenzeinrichtungen (6) vorgesehen ist, wobei die Datenverteilmittel (7) zur Anpassung der Datenraten und Verteilung von vollständigen oder jeweils ausgewählten fusionierten Situationsdaten an die Assistenzeinrichtungen (6) ausgebildet sind.

5. Datenverarbeitungseinheit nach einem der vorhergehenden Ansprüche, **dadurch gekennzeichnet, dass** Horizontauswahlmittel zur Auswahl relevanter Straßennetzdaten (4) für die Umgebung der aktuellen Fahrzeugposition als Horizont aus den Straßennetzdaten (1) vor eine Standard-Schnittstelle (5) geklemmt sind und die Zusammenführung der Umfelddaten (2) mit den ausgewählten relevanten Straßennetzdaten (4) erfolgt.

6. Datenverarbeitungseinheit nach Anspruch 5, **dadurch gekennzeichnet, dass** die Mittel zur Zusammenführung (3) der Straßennetzdaten (1) und der Umfelddaten (2) sowohl zur Zusammenfiihrung der Straßennetzdaten (1) als auch der ausgewählten relevanten Straßennetzdaten (4) ausgebildet sind.

7. Datenverarbeitungseinheit nach einem der Ansprüche 1 bis 4, **dadurch gekennzeichnet, dass** Horizontauswahlmittel zur Beschränkung der fusionierten Situationsdaten vorgesehen sind, um die fusionierten Situationsdaten auf die aktuelle räumliche Umgebung des Kraftfahrzeuges vorgesehen sind.

8. Verfahren zur Bereitstellung von aktuellen fusionierten Situationsdaten an mindestens eine Assistenzeinrichtung (6) in Kraftfahrzeugen, **gekennzeichnet durch**
- Zusammenführen von Straßennetzdaten (1) eines Straßennetzes und von Umfelddaten (2) mit Informationen über das Umfeld des Kraftfahrzeuges, wobei die digitalen Straßennetzdaten (1) mit den Umfelddaten (2) aktualisiert, modifiziert und/oder ergänzt werden und/oder die Umfelddaten (2) mittels der Straßennetzdaten (1) modifiziert werden, und
- Weitergeben der zusammengeführten Straßennetz- und Umfelddaten (1, 2) als fusionierte Situationsdaten in einem einheitlichen Datenprotokoll an mindestens eine Assistenzeinrichtung (6) des Kraftfahrzeuges.

9. Verfahren nach Anspruch 8, **gekennzeichnet durch** Auswählen relevanter Straßennetzdaten (4) für die Umgebung der aktuellen Fahrzeugposition aus den Straßennetzdaten (1) und Zusammenführen der Umfelddaten (2) mit den ausgewählten relevanten Straßennetzdaten (4).

10. Verfahren nach Anspruch 9, **gekennzeichnet durch** Zusammenführen der Umfelddaten (2) sowohl mit den Straßennetzdaten (1) als auch mit den ausgewählten relevanten Straßennetzdaten (4).

11. Verfahren nach Anspruch 8, **gekennzeichnet durch** Auswählen relevanter Straßennetzdaten (4) für die Umgebung der aktuellen Fahrzeugposition aus den fusionierten Situationsdaten, um die fusionierten Situationsdaten auf die aktuelle räumliche Umgebung des Kraftfahrzeuges zu beschränken.
